# EUROPEAN PATENT APPLICATION

(11) **EP 2 589 581 A1**
(43) Date of publication of application: **08.05.2013**
(21) Application number: 11187547.2
(22) Date of filing: 02.11.2011
(51) Int. Cl.: C05F 17/02

(54) **Composting apparatus**

(71) Applicant: AC Innovations Ltd, Newcastle upon Tyne, Tye and Wear NE3 3LS (GB)
(72) Inventor: Callaghan, Anthony Gerard, Morpeth, Northumberland NE61 3RA (GB)
(74) Representative: Vinsome, Rex Martin

(57) **Abstract**

A composting apparatus (2) is disclosed. The apparatus comprises a body (4) defining a first volume (6) for receiving material (8) to be composted, a first aperture (12) for providing access to the first volume, and an air inlet (13). A lid (10) restricts access to the first volume by resiliently deforming while engaging the other body (4). A valve (34) restricts flow of gas at elevated temperature from the body (4).

## Description

The present invention relates to a composting apparatus, and relates particularly, but not exclusively, to a composting apparatus for processing domestic food waste.

At present, large quantities of domestic food waste in the United Kingdom are transported to and disposed of in landfill sites. It would be desirable if more food waste could be disposed of by means of composting.

Domestic composting of food waste is difficult in the United Kingdom because temperature and weather conditions favour "cold" (i.e. ambient temperature up to 40°C) composting. However, below 40°C, insufficient moisture is evaporated from the food waste, resulting in putrefaction (anaerobic decay) and release of noxious odours which can attract vermin and flies, and below 60°C there is no significant pathogen destruction. For example, the UK Department for Environment, Food and Rural Affairs stipulates that (in vessel) central composting systems should be capable of reaching 70°C for at least one hour, or 60°C for six hours, i.e. "hot" composting.

Attempts to carry out domestic "hot" composting of food waste present a number of difficulties. In order to reach and retain the optimal working temperature of 60°C, the heat produced by bacteria consuming small amounts of food waste (typically 2-5kg per household per week) must be greater than the heat lost via conduction and convection to the atmosphere. At the same time, heat is required to evaporate excess water and maintain a temperature gradient between the active compost and the ambient air. This temperature gradient needs to be sufficient to maintain sufficient buoyancy airflow to meet both the stoichiometric oxygen demand of the bacteria working at 60°C and to remove excess moisture.

Thermally insulated composting bins often suffer from the drawback that thermally insulating layers are perforated by means of holes to allow inlet and outlet of air. In a fixed volume container in which air is flowing in and out to provide oxygen to bacteria, maintaining a constant temperature above ambient temperature generally requires a higher pressure than ambient pressure. For example, in a domestic compost bin of capacity approximately 300 litres, a target temperature of 60°C and 2-5kg of food waste per week acting as a heat source, the vessel needs to be near air tight with minimum surface area through which gas can exit.

A known compost maker is disclosed in WO 93/16018. However, this arrangement suffers from the drawback that its complicated construction makes it expensive to produce.

Preferred embodiment of the present invention seek to overcome the above disadvantage of the prior art.

According to the present invention, there is provided a composting apparatus comprising:-
a body defining at least one first volume for receiving material to be composted, at least one first aperture for providing access to at least one said first volume, and at least one air inlet;
at least one closure member for at least partially closing at least one said first aperture to restrict access to at least one said first volume, wherein at least part of at least one of (i) said closure member and (ii) said body is adapted to resiliently deform while engaging the other of (i) said closure member and (ii) said body to restrict access to said first volume; and
gas flow restricting means for restricting flow of gas at elevated temperature from at least one said first volume to the exterior of said body and/or at least one said closure member.

By providing an apparatus in which at least part of at least one of (i) said closure member and (ii) said body is adapted to resiliently deform while engaging the other of (i) said closure member and (ii) said body to restrict access to said first volume, this provides the advantage of reducing the cost of manufacture and the weight of the apparatus, since additional components to retain the closure member in engagement with the body are not required.

At least one of (i) at least one said closure member and (ii) said body may comprise at least one first protrusion adapted to resiliently deform as a result of engagement with the other of (i) at least one said closure member and (ii) to restrict access to at least one said first volume.

This provides the advantage of enabling an existing bin to be retrofitted.

At least one of (i) at least one said closure member and (ii) said body may be at least partially formed of at least one resiliently deformable plastics material.

This provides the advantage of reducing the cost and weight of the apparatus, since a large proportion of the apparatus can be manufactured by moulding.

At least one said plastics material may be a foam material.

This provides the advantage of reducing the weight while increasing the thermal insulation of the apparatus.

The apparatus may further comprise at least one partition member for defining a boundary between at least one said first volume and at least one second volume and having a plurality of second apertures therethrough to allow passage of liquid from at least one said first volume to at least one said second volume and/or passage of gas from at least one said second volume to at least one said first volume.

This provides the advantage of enabling leachate to drain from the material during composting, thereby speeding up the fluid removal and composting processes.

At least one said partition member may be adapted to cause gas to diffuse into said material to be composted and reduce flow of gas to at least one internal wall of said body.

This provides the advantage of improving the efficiency of operation of the apparatus by increasing the proportion of gas directed through the material to be composted.

At least one said partition member may have at least one portion without said second apertures therethrough adjacent at least one edge thereof.

This provides the advantage of minimising gas flow along internal walls of the body, thereby increasing the efficiency of operation of the apparatus.

Said gas flow restricting means may comprise at least one restriction in at least one respective third aperture in at least one said closure member and/or said body.

This provides the advantage of providing an easily adjustable flow restricting means at low cost which thereby enables the temperature of the composting process to be easily controlled.

At least one said restriction may be adjustable.

The apparatus may further comprise temperature sensing means for sensing temperature of gas in the vicinity of said material to be composted.

This provides the advantage of enabling an approximate value of the temperature of the material to be composted to be determined, while avoiding contact with the material to be composted.

Said temperature sensing means may comprise a respective probe mounted to at least one said closure member.

This provides the advantage of avoiding obstruction of filling of material into at least one said first volume.

The apparatus may further comprise gas flow deflecting means for deflecting gas flow away from a region of engagement of at least one said closure member with said body.

This provides the advantage of reducing gas leakage from the area where the closure member joins the body, as a result of which the region of mutual engagement of the closure member and body can be manufactured to less exact tolerances. This in turn reduces the cost of manufacture of the apparatus.

Said gas flow deflecting means may comprise at least one respective second protrusion arranged on said body and/or at least one said closure member.

The apparatus may further comprise odour absorption means.

Said odour absorption means may comprise at least one filter arranged in a respective said third aperture.

A preferred embodiment of the invention will now be described, by way of example only and not in any limitative sense, with reference to the accompanying drawings, in which:-
Figure 1 is a side view of a composting apparatus embodying the present invention;
Figure 2 is an enlarged view of part of the apparatus of Figure 1;
Figure 3 is a side cross sectional view of the apparatus of Figure 1;
Figure 4 is a plan view of a partition member of the apparatus of Figure 3;
Figure 5 is a plan view of the apparatus of Figure 1 with a cover thereof closed;
Figure 6 is a front view of the apparatus of Figure 1;
Figure 7 is a plan view of the apparatus of Figure 1 with a cover thereof open;
Figure 8 is a rear view of the apparatus of Figure 1;
Figure 9 is a side cross-sectional view of a cover of the apparatus of Figure 1;
Figure 10 is a plan view of part of the cover of Figure 9; and
Figure 11 is a plan view of a plate mounted to the cover of Figure 9.

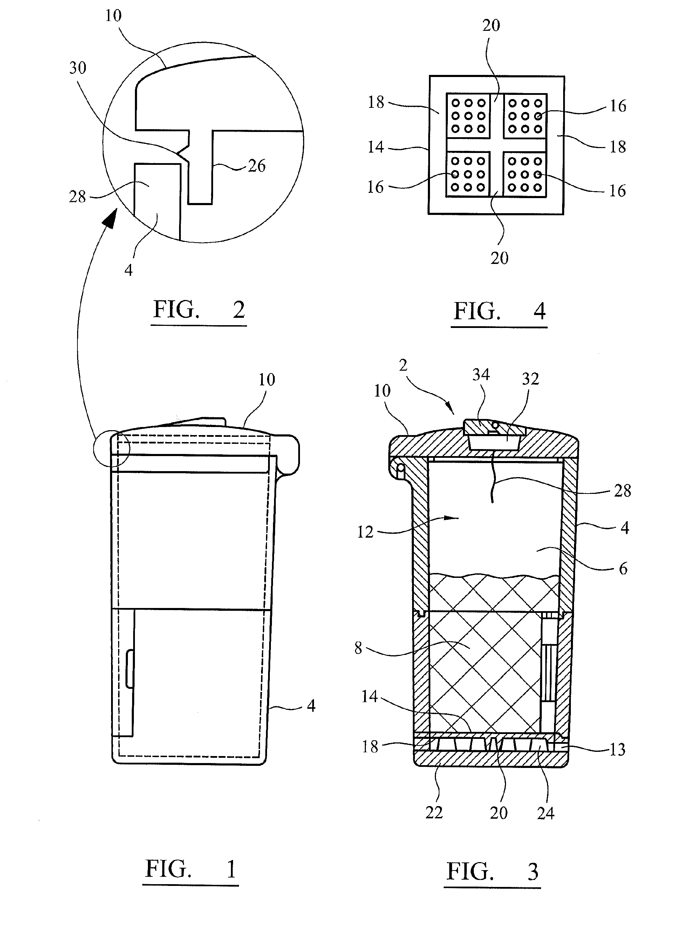

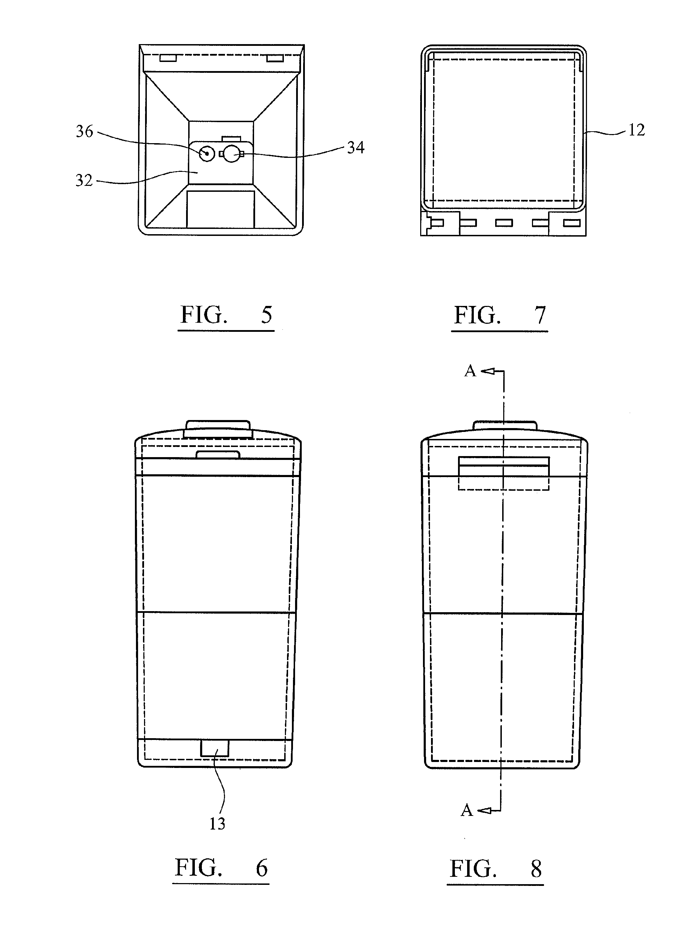

Referring to Figures 1 to 11, a composting apparatus 2 comprises a body 4 defining a first volume 6 for receiving material 8 for composting and a lid 10 for closing the body 4 and hinged to the body 4. The lid 10 and body 4 are formed from expanded polypropylene (EPP). The body 4 defines a first aperture 12 for receiving material 8 to be composted into the first volume 6, and an air inlet 13 containing a wire mesh to prevent entry of flies or vermin. An aeration plate 14 having second apertures 16 extending therethrough but spaced from edge regions 18 thereof is received at a lower part of the first volume 6. The aeration plate 14 is provided with ribs 20 which rest on base 22 of body 4 to define a second volume 24 for receiving liquid draining under gravity from the material 8 to be composted supported on the aeration plate 14.

Referring in detail to Figure 2, the lid 10 is formed with a gas directing member 26 for directing hot gas away from the area where the lid 10 meets upper periphery 28 of the body 4, and is provided with a rib 30 which can be resiliently deformed when the lid 10 engages the body 4 to minimise flow of gas out of the region where the lid 10 meets the body 4.

A third aperture 32 is defined in the lid 10, and is closed by means of a butterfly valve 34, so that flow of hot gas out of the third aperture 32 is restricted to a variable extent. A display 36 is also provided in an upper part of the lid 10, and is connected to a temperature sensor 38 extending from a lower surface of the lid 10 for determining the approximate temperature of gas in the region above the material 8 to be composted. Since such gas is approximately 5°C below the material itself, this gives an approximate indication of the temperature of the composting material 8.

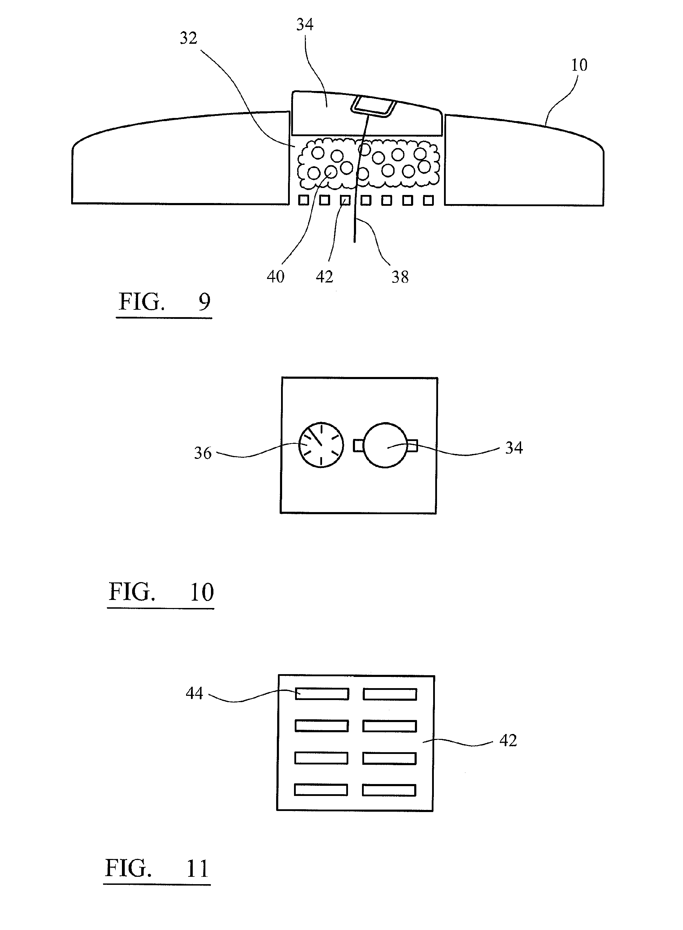

As shown in greater detail in Figures 9 and 11, an odour removing material 40 is secured in aperture 32 by means of a plate 42 having slots 44. The plate 42 is secured to the lower surface of the lid 10.

The operation of the apparatus 2 shown in the Figures will now be described.

Material 8 to be composted is placed on the aeration plate 14 located in the lower part of the body 4 and the lid 10 closed such that the rib 30 resiliently deforms to retain the lid 10 in position in engagement with the upper periphery 28 of the body 4. As aerobic composting proceeds, the temperature of the material 8 being composted increases, causing warm gas to rise towards the lid 10. The protrusion 26 from the lid 10 minimises the extent to which warm gas can escape between the lid 10 and the upper periphery 28 of the body 4, and warm gas primarily escapes through the third aperture 32 having the butterfly valve 34, as a result of which elevated temperature of the material 8 in the body 4 can be maintained. As the reaction progresses, rising warm gases draw cooler air from the second volume 24, which allows continuation of the stoichiometric bacterial reaction. At the same time, excess liquid in the material 8 to be composted can drain through the second apertures 16 in the aeration plate 14 and collect in the second volume 24 at the bottom of the body 4.

It will be appreciated by persons skilled in the art that the above embodiment has been described by way of example only, and not in any limitative sense, and that various alterations and modifications are possible without departure from the scope of the invention as defined by the appended claims.

## Claims

1. A composting apparatus comprising:-
a body defining at least one first volume for receiving material to be composted, at least one first aperture for providing access to at least one said first volume, and at least one air inlet;
at least one closure member for at least partially closing at least one said first aperture to restrict access to at least one said first volume, wherein at least part of at least one of (i) said closure member and (ii) said body is adapted to resiliently deform while engaging the other of (i) said closure member and (ii) said body to restrict access to said first volume; and
gas flow restricting means for restricting flow of gas at elevated temperature from at least one said first volume to the exterior of said body and/or at least one said closure member.

2. An apparatus according to claim 1, wherein at least one of (i) at least one said closure member and (ii) said body comprises at least one first protrusion adapted to resiliently deform as a result of engagement with the other of (i) at least one said closure member and (ii) to restrict access to at least one said first volume.

3. An apparatus according to claim 1 or 2, wherein at least one of (i) at least one said closure member and (ii) said body is at least partially formed of at least one resiliently deformable plastics material.

4. An apparatus according to claim 3, wherein at least one said plastics material is a foam material.

5. An apparatus according to any one of the preceding claims, further comprising at least one partition member for defining a boundary between at least one said first volume and at least one second volume and having a plurality of second apertures therethrough to allow passage of liquid from at least one said first volume to at least one said second volume and/or passage of gas from at least one said second volume to at least one said first volume.

6. An apparatus according to claim 5, wherein at least one said partition member is adapted to cause gas to diffuse into said material to be composted and reduce flow of gas to at least one internal wall of said body.

7. An apparatus according to claim 5 or 6, wherein at least one said partition member has at least one portion without said second apertures therethrough adjacent at least one edge thereof.

8. An apparatus according to any one of the preceding claims, wherein said gas flow restricting means comprises at least one restriction in at least one respective third aperture in at least one said closure member and/or said body.

9. An apparatus according to claim 8, wherein at least one said restriction is adjustable.

10. An apparatus according to any one of the preceding claims, further comprising temperature sensing means for sensing temperature of gas in the vicinity of said material to be composted.

11. An apparatus according to claim 10, wherein said temperature sensing means comprises a respective probe mounted to at least one said closure member.

12. An apparatus according to any one of the preceding claims, further comprising gas flow deflecting means for deflecting gas flow away from a region of engagement of at least one said closure member with said body.

13. An apparatus according to claim 12, wherein said gas flow deflecting means comprises at least one respective second protrusion arranged on said body and/or at least one said closure member.

14. An apparatus according to any one of the preceding claims, further comprising odour absorption means.

15. An apparatus according to claim 8 or 9 and claim 14, wherein said odour absorption means comprises at least one filter arranged in a respective said third aperture.

## Amended claims

### Amended claims in accordance with Rule 137(2) EPC.

**1.** A composting apparatus comprising:-
a body (4) defining at least one first volume (6) for receiving material to be composted, at least one first aperture (12) for providing access to at least one said first volume, and at least one air inlet (13);
at least one closure member (10) for at least partially closing at least one said first aperture to restrict access to at least one said first volume; and
gas flow restricting means (34) for restricting flow of gas at elevated temperature from at least one said first volume to the exterior of said body and/or at least one said closure member;
**characterised in that** at least one of (i) at least one said closure member and (ii) said body comprises at least one first protrusion (30) adapted to resiliently deform as a result of engagement with the other of (i) at least one said closure member and (ii) said body to restrict access to at least one said first volume.

**2.** An apparatus according to claim 1, wherein at least one of (i) at least one said closure member and (ii) said body is at least partially formed of at least one resiliently deformable plastics material.

**3.** An apparatus according to claim 2, wherein at least one said plastics material is a foam material.

**4.** An apparatus according to any one of the preceding claims, further comprising at least one partition member (14) for defining a boundary between at least one said first volume and at least one second volume (24) and having a plurality of second apertures (16) therethrough to allow passage of liquid from at least one said first volume to at least one said second volume and/or passage of gas from at least one said second volume to at least one said first volume.

**5.** An apparatus according to claim 4, wherein at least one said partition member is adapted to cause gas to diffuse into said material to be composted and reduce flow of gas to at least one internal wall of said body.

**6.** An apparatus according to claim 4 or 5, wherein at least one said partition member has at least one portion (18) without said second apertures therethrough adjacent at least one edge thereof.

**7.** An apparatus according to any one of the preceding claims, wherein said gas flow restricting means comprises at least one restriction in at least one respective third aperture (32) in at least one said closure member and/or said body.

**8.** An apparatus according to claim 7, wherein at least one said restriction is adjustable.

**9.** An apparatus according to any one of the preceding claims, further comprising temperature sensing means (38) for sensing temperature of gas in the vicinity of said material to be composted.

**10.** An apparatus according to claim 9, wherein said temperature sensing means comprises a respective probe mounted to at least one said closure member.

**11.** An apparatus according to any one of the preceding claims, further comprising gas flow deflecting means (26) for deflecting gas flow away from a region of engagement of at least one said closure member with said body.

**12.** An apparatus according to claim 11, wherein said gas flow deflecting means comprises at least one respective second protrusion arranged on said body and/or at least one said closure member.

**13.** An apparatus according to any one of the preceding claims, further comprising odour absorption means (40).

**14.** An apparatus according to claim 7 or 8 and claim 13,
wherein said odour absorption means comprises at least one filter arranged in a respective said third aperture.
